(19) Europäisches Patentamt
European Patent Office
Office européen des brevets

(11) Veröffentlichungsnummer: **0 000 388**
**B1**

(12) **EUROPÄISCHE PATENTSCHRIFT**

(21) Anmeldenummer: **78100345.4**

(22) Anmeldetag: **11.07.78**

(51) Int. Cl.³: **C 07 F 9/65**, A 01 N 57/16

(54) **Pyridazinon(thiono)-phosphorsäureester, Verfahren zu ihrer Herstellung und ihre Verwendung als Insektizide und Akarizide**

(30) Priorität: **15.07.77 DE 2732101**

(43) Veröffentlichungstag der Anmeldung:
**24.01.79 Patentblatt 79/02**

(45) Bekanntmachung des Hinweises auf die Patenterteilung:
**26.11.80 Patentblatt 80/24**

(84) Benannte Vertragsstaaten:
**BE CH DE FR GB NL SE**

(56) Entgegenhaltungen:
**DE - A - 2 603 993**
**JP 74 12702**
**US - 3 100 206**

(73) Patentinhaber: **BAYER AG**
**Zentralbereich Patente, Marken und Lizenzen**
**D - 5090 Leverkusen 1, Bayerwerk (DE)**

(72) Erfinder: **Maurer, Fritz, Dr.**
**Roeberstrasse 8**
**D - 5600 Wuppertal 1 (DE)**
**Hammann, Ingeborg, Dr.**
**Belfortstrasse 9**
**D - 5000 Köln (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 000 388 B1

Courier Press, Leamington Spa, England.

Pyridazinon (thiono)-phosphorsäureester, Verfahren zu ihrer Herstellung und ihre Verwendung als Insektizide und Akarizide

Die vorliegende Erfindung betrifft neue Pyridazinon(thiono)-phosphorsäureester, ein Verfahren zu ihrer Herstellung sowie ihre Verwendung als Insektizide und Akarizide.

Es ist bereits bekannt, daß O,O-Dialkyl-O-pyridazinyl thiono-phosphorsäureester, z.B. O,O-Diäthyl-O-(1-phenyl-1,6-di-hydro-pyridaz(6) on (3)yl)-thionophosphorsäureester, sich durch insektizide und akarizide Wirksamkeit auszeichnen (vergleiche US-Patentschrift 2759 937).

Außerdem sind aus der japanischen Patentanmeldung 74 12 702 O,O-Dialkyl-O-3 (N-methyl-6-pyridazinonyl) (thiono)phosphorsäureester mit insektiziden Eigenschaften bekannt. Die eingangs erwähnten und unten näher beschriebenen Pyridazinon(thiono)phosphorsäureester sind wie durch Vergleichsversuche gezeigt werden konnte den bekannten strukturell ähnlich aufgebauten Phosphorsäureestern in ihrer Wirkung als Insektizide und Akarizide unerwartet überlegen.

Es wurden nun die neuen Pyridazinon(thiono)-phosphor-säureester der Formel

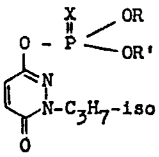

(I)

synthetisiert,

worin

R und R′ für gleiches oder verschiedenes Alkyl und

X für Sauerstoff oder Schwefel stehen.

Diese neuen Verbindungen zeichnen sich durch starke insektizide und akarizide Eigenschaften aus.

Weiterhin wurde gefunden, daß die neuen Pyridazinon(thiono)-phosphorsäureester der Formel (I) erhalten werden, wenn man (Thiono)Phosphorsäurediesterhalogenide der Formel

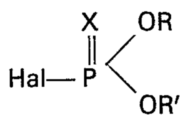

(II)

in welcher

R, R′ und X die oben angegebene Bedeutung haben und

Hal für Halogen, vorzugsweise Chlor, steht, mit 1,6-Di-hydro-3-hydroxy-1-isopropyl-pyridazin(6)on der Formel

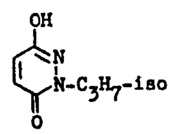

(III)

gegebenenfalls in Form der Alkali, Erdalkali- oder Ammoniumsalze oder gegebenenfalls in Gegenwart eines Säureakzeptors und gegebenenfalls in Gegenwart eines Lösungsmittels umsetzt.

Überraschenderweise zeigen die erfindungsgemäßen Pyridazinon-(thiono)-phosphorsäureester (I) eine bessere insektizide und akarizide Wirkung als die vorbekannten Verbindungen analoger Konstitution und gleicher Wirkungsrichtung. Die Produkte gemäß vorliegender Erfindung stellen somit eine echte Bereicherung der Technik dar.

Verwendet man beispielsweise O-Äthyl-O-sek.-butyl-phosphor-säurediesterchlorid und 1,6-Dihydro-3-hydroxy-1-isopropyl-pyridazin(6)on als Ausgangsmaterialien, so kann der Reaktionsverlauf durch das folgende Formelschema wiedergegeben werden:

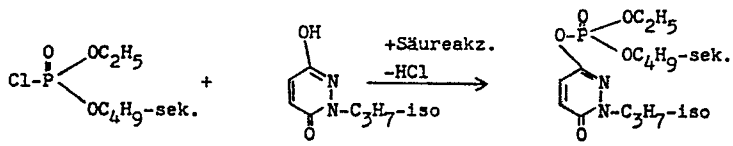


Die zu verwendenden Ausgangsstoffe sind durch die Formeln (II) und (III) allgemein definiert. Vorzugsweise stehen darin jedoch

R und R′

unabhängig voneinander für geradkettiges oder verzweigtes Alkyl mit 1 bis 8, insbesondere 1 bis 4, Kohlenstoffatomen und

X für Schwefel.

Die als Ausgangsstoffe zu verwendenden (Thiono)Phosphorsäurediesterhalogenide (II) sind bekannt und nach literaturbekannten Verfahren auch technisch gut herstellbar. Als Beispiele dafür seien im einzelnen genannt:

O,O-Dimethyl-, O,O-Diäthyl-, O,O-Di-n-propyl-, O,O-Di-isopropyl-, O,O-Di-n-butyl-, O,O-Di-iso-butyl-, O,O-Di-sek.-butyl-, O-Methyl-O-äthyl-, O-Methyl-O-n-propyl-, O-Methyl-O-iso-propyl-, O-Methyl-O-n-butyl-, O-Methyl-O-iso-butyl-, O-Methyl-O-sek.-butyl-, O-Äthyl-O-n-propyl-, O-Äthyl-O-isopropyl-, O-Äthyl-O-n-butyl, O-Äthyl-O-iso-butyl-, O-Äthyl-O-sek.-butyl-, O-n-Propyl-O-iso-propyl-, O-n-Propyl-O-n-butyl-, O-n-Propyl-O-iso-butyl-, O-n-Propyl-O-sek.-butyl-, O-iso-Propyl-O-n-butyl-, O-iso-Propyl-O-iso-butyl-, O-iso-Propyl-O-sek.-butylphosphorsäurediesterchlorid und die entsprechenden Thionoanalogen.

Das weiterhin als Ausgangsstoff zu verwendende 1,6-Dihydro-3-hydroxy-1-iso-propyl-pyridazin(6)on (III) kann ebenfalls nach literaturbekannten Verfahren hergestellt werden.

Das Verfahren zur Herstellung der erfindungsgemäßen Verbindungen wird bevorzugt unter Mitverwendung geeigneter Lösungs- oder Verdünnungsmittel durchgeführt. Als solche kommen praktisch alle inerten organischen Solventien infrage. Hierzu gehören insbesondere aliphatische und aromatische, gegebenenfalls chlorierte Kohlenwasserstoffe, wie Benzol, Toluol, Xylol, Benzin, Methylenchlorid, Chloroform, Tetrachlorkohlenstoff, Chlorbenzol, oder Äther, z.B. Diäthyl- und Dibutyläther, Dioxan, ferner Ketone, beispielsweise Aceton, Methyläthyl-, Methyl-isopropyl- und Methyl-isobutylketon, außerdem Nitrile, wie Aceto- und Propionitril.

Als Säureakzeptoren können alle üblichen Säurebindemittel Verwendung finden. Besonders bewährt haben sich Alkalicarbonate und -alkoholate, wie Natrium- und Kaliumcarbonat, -methylat bzw. -äthylat, ferner aliphatische, aromatische oder heterocyclische Amine, beispielsweise Trimethylamin, Triäthylamin, Dimethylanilin, Dimethylbenzylamin und Pyridin.

Die Reaktionstemperatur kann innerhalb eines größeren Berreiches variiert werden. Im allgemeinen arbeitet man zwischen 0 und 100°C, vorzugsweise bei 20 bis 60°C.

Die Umsetzung läßt man in allgemeinen bei Normaldruck ablaufen.

Zur Durchführung des Verfahrens setzt man die Ausgangskomponenten vorzugsweise in äquivalenten Verhältnissen ein. Ein Überschuß der einen oder anderen Komponente bringt keine wesentlichen Vorteile. Die Reaktionskomponenten werden im allgemeinen in einem der angegebenen Lösungsmittel zusammengegeben und meist bei erhöhter Temperatur zur Vervollständigung der Reaktion ein oder mehrere Stunden gerührt. Danach gibt man ein organisches Lösungsmittel, z.B. Toluol, zu und arbeitet die organische Phase wie üblich durch Waschen, Trocknen und Abdestillieren des Lösungsmittels auf.

Die neuen Verbindungen fallen in Form von Ölen an, die sich meist nicht unzersetzt destillieren lassen, jedoch durch sogenanntes "Andestillieren", d.h. durch längeres Erhitzen unter vermindertem Druck auf mäßig erhöhte Temperaturen von den letzten flüchtigen Anteilen befreit und auf diese Weise gereinigt werden. Zu ihrer Charakterisierung dient der Brechungsindex.

Wie bereits mehrfach erwähnt, zeichnen sich die erfindungsgemäßen Pyridazinon(thiono)-phosphorsäureester durch eine hervorragende insektizide und akarizide Wirksamkeit aus. Sie wirken nicht nur gegen Pflanzen-, Hygiene- und Vorratsschädlinge, sondern auch auf dem veterinär-medizinischen Sektor gegen tierische Parasiten (Ektoparasiten), wie parasitierende Fliegenlarven. Die Verbindungen besitzen bei geringer Phytoxizität sowohl eine gute Wirkung gegen saugende als auch fressende Insekten und Milben.

Aus diesem Grunde können die erfindungsgemäßen Verbindungen mit Erfolg im Pflanzenschutz sowie auf dem Hygiene-, Vorratsschutz- und Veterinärsektor als Schädlingsbekämpfungsmittel eingesetzt werden.

Die Wirkstoffe eignen sich bei guter Pflanzenverträglichkeit und günstiger Warmblütertoxizität zur Bekämpfung von tierischen Schädlingen, insbesondere Insekten und Spinnentieren die in der Landwirtschaft, in Forsten, im Vorrats- und Materialschutz sowie auf dem Hygienesektor vorkommen. Sie sind gegen normal sensible und resistante Arten sowie gegen alle oder einzelne Entwicklungsstadien wirksam. Zu den oben erwähnten Schädlingen gehören:

Aus der Ordnung der Isopoda z.B. Oniscus asellus, Armadillidium vulgare, Porcellio scaber.

Aus der ordnung der Kiplopoda z.B. Blaniulus guttulatus.

Aus der Ordnung der Chilopoda z.B. Geophilus carpophagus, Scutigera spec.

Aus der Ordnung der Symphyla z.B. Scutigerella immaculata.

Aus der Ordnung der Thysanura z.B. Lepisma saccharina.

Aus der Ordnung der Collembola z.B. Onychiurus armatus.

Aus der Ordnung der Orthoptera z.B. Blatta orientalis, Periplaneta americana, Leucophaea maderae, Blattella germanica, Acheta domesticus, Gryllotalpa spp., Locusta migratoria migratorioides, Melanoplus differentialis, Schistocerca gregaria.

Aus der Ordnung der Dermaptera z.B. Forficula auricularia.

Aus der Ordnung der Isoptera z.B. Reticulitermes spp..

Aus der Ordnung der Anoplura z.B. Phylloxera vastatrix, Pemphigus spp., Pediculus humanus corporis, Haematopinus spp., Linognathus spp.

Aus der Ordnung der Mallophaga z.B. Trichodectes spp., Damalinea spp.

Aus der Ordnung der Thysanoptera z.B. Hercinothrips femoralis, Thrips tabaci.

Aus der Ordnung der Heteroptera z.B. Eurygaster spp., Dysdercus intermedius, Piesma quadrata, Cimex lectularius, Rhodnius prolixus, Triatoma spp.

Aus der Ordnung der Homoptera z.B. Aleurodes brassicae, Bemisia tabaci, Trialeurodes vaporariorum, Aphis gossypii, Brevicoryne brassicae, Cryptomyzus ribis, Doralis fabae, Doralis pomi, Eriosoma lanigerum, Hyalopterus arundinis, Macrosiphum avenae, Myzus spp., Phorodon humuli, Rhopalosiphum padi, Empoasca spp., Euscelis bilobatus, Nephotettix cincticeps, Lecanium corni, Saissetia oleae, Laodelphax striatellus, Nilaparvata lugens, Aonidiella aurantii, Aspidiotus hederae, Pseudococcus spp., Psylla spp.

Aus der Ordnung der Lepidoptera z.B. Pectinophora gossypiella, Bupalus piniarius Cheimatobia brumata, Lithocolletis blancardella, Hyponomeuta padella, Plutella maculipennis, Malacosoma neustria, Euproctis chrysorrhoea, Lymantria spp., Bucculatrix thurberiella, Phyllocnistis citrella, Agrotis spp., Euxoa spp., Feltia spp., Earias insulana, Heliothis spp., Laphygma exigua, Mamestra brassicae, Panolis flammea, Prodenia litura, Spodoptera spp., Trichoplusia ni, Carpocapsa pomonella, Pieris spp., Chilo spp., Pyrausta nubilalis, Ephestia kuehniella, Galleria mellonella, Cacoecia podana, Capua reticulana, Choristoneura fumiferana, Clysia ambiguella, Homona magnanima, Tortrix viridana.

Aus der Ordnung der Coleoptera z.B. Anobium punctatum, Rhizopertha dominica, Bruchidius obtectus, Acanthoscelides obtectus, Hylotrupes bajulus, Agelastica alni, Leptinotarsa decemlineata, Phaedon cochleariae, Diabrotica spp., Psylliodes chrysocephala, Epilachna varivestis, Atomaria spp., Orzyaephilus surinamensis, Anthonomus spp., Sitophilus spp., Otiorrhynchus sulcatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Ptinus spp., Niptus hololeucus, Gibbium psylloides, Tribolium spp., Tenebrio molitor, Agriotes spp., Conoderus spp., Melolontha melolontha, Amphimallon solstitialis, Costelytra zealandica.

Aus der Ordnung der Hymenoptera z.B. Diprion spp., Hoplocampa spp., Lasius spp., Monomorium pharaonis, Vespa spp.

Aus der Ordnung der Diptera z.B. Aëdes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hyppobosca spp., Stomoxys spp., Oestrus spp., Hypoderma spp., Tabanus spp., Tannia spp..

Bibio hortulanus, Oscinella frit, Phorbia spp., Pegomyia hyoscyami, Ceratitis capitata, Dacus oleae, Tipula paludosa.

Aus der Ordnung der Siphonaptera z.B. Xenopsylla cheopis, Ceratophyllus spp..

Aus der Ordnung der Arachnida z.B. Scopio maurus, Latrodectus mactans.

Aus der Ordnung der Acarina z.B. Acarus siro, Argas spp., Ornithodoros spp., Dermanyssus gallinae, Eriophyes ribis, Phyllocoptruta oleivora, Boophilus spp., Rhipicephalus spp., Amblyomma spp., Hyalomma spp., Ixodes spp., Psoroptes spp., Chlorioptes spp., Sarcoptes spp., Tarsonemus spp., Bryobia praetiosa, Panonychus spp., Tetranychus spp..

Die Wirkstoffe können in die üblichen Formulierungen übergeführt werden, wie Lösungen, Emulsionen, Spritzpulver, Suspensionen, Pulver, Stäubemittel, Schäume, Pasten, lösliche Pulver, Granulate, Aerosole, Suspensions-Emulsionskonzentrate, Saatgutpuder, Wirkstoff-imprägnierte Natur- und synthetische Stoffe, Feinstverkapselungen in polymeren Stoffen und in Hüllmassen für Saatgut,ferner in Formulierungen mit Brennsätzen, wie Räucherpatronen, -dosen, -spiralen u.ä, sowie ULV-Kalt- und Warmnebel-Formulierungen.

Diese Formulierungen werden in bekannter Weise hergestellt, z.B. durch Vermischen der Wirkstoffe mit Streckmitteln, also flüssigen Lösungsmitteln, unter Druck stehender verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen infrage: Aromaten, wie Xylol, Toluol, oder Alkylnaphthaline, chlorierte Aromaten oder chlorierte aliphatische Kohlenwasserstoffe, wie Chlorbenzole, Chloräthylene oder Methylenchlorid, aliphatische Kohlenwasserstoffe, wie Cyclohexan oder Parafine, z.B. Erdölfraktionen, Alkohole, wie Butanol oder Glycol sowie deren Äther und Ester, Ketone, wie Aceton, Methyl-äthylketon, Methylisobutylketon oder Cyclohexanon, stark polare Lösungsmittel, wie Dimethylformamid und Dimethylsulfoxid, sowie Wasser; mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgase, wie Halogenkohlenwasserstoffe sowie Butan, Propan, Stickstoff und Kohlendioxid; als feste Trägerstoffe; natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate: gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehle, Kokosnußschalen, Maiskolben und Tabakstengel; als Emulgier und/oder schaumerzeugende Mittel: nichtionogene und anionische Emulgatoren, wie Polyoxyäthylen-Fettsäure-Ester, Polyoxyäthylen-Fettalkohol-Äther, z.B. Alkylaryl-polyglykol-äther, Alkylsulfonate, Alkylsulfate, Arylsulfonate sowie Eiweißhydrolysate;

als Dispergiermittel: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat.

Es können Farbstoffe wie anorganische Pigmente, z.B. Eisenoxid, Titanoxid, Ferrocyanblau und organische Farbstoffe, wie Alizarin-, Azo-Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90%.

Die Anwendung der erfindungsgemäßen Wirkstoffe erfolgt in Form ihrer handelsüblichen Formulierungen und/oder den aus diesen Formulierungen bereiteten Anwendungsformen.

Der Wirkstoffgehalt der aus den handelsüblichen Formulierungen bereiteten Anwendungsformen kann in weiten Bereichen variieren. Die Wirkstoffkonzentration der Anwendungsformen kann von 0,0000001 bis zu 100 Gew.- Wirkstoff, vorzugsweise zwischen 0,01 und 10 Gew.- liegen.

Die Anwendung geschieht in einer den Anwendungsformen angepaßten üblichen Weise.

Bei der Anwendung gegen Hygiene- und Vorratsschädlinge zeichnen sich die Wirkstoffe durch eine hervorragende Residualwirkung auf Holz und Ton sowie durch eine gute Alkalistabilität auf gekälkten Unterlagen aus.

## Beispiel A

Myzus-test (Kontakt-Wirkung)

Lösungsmittel: 3 Gewichtsteile Aceton

Emulgator: 1 Gewichtsteil Alkylarylpolyglykoläther

Zur Herstellung einer zweckmäßigen Wirkstoffzubereitung vermischt man 1 Gewichtsteil Wirkstoff mit der angegeben Menge Lösungsmittel und der angegebenen Menge Emulgator und verdünnt das Konzentrat mit Wasser auf die gewünschte Konzentration.

Mit der Wirkstoffzubereitung werden Kohlpflanzen (Brassica oleracea), welche stark von der Pfirsichblattlaus (Myzus persicae) befallen sind, tropfnaß besprüht.

Nach den angegebenen Zeiten wird die Abtötung in % bestimmt. Dabei bedeutet 100%, daß alle Blattläuse agetötet wurden; 0% bedeutet, daß keine Blattläuse abgetötet wurden.

Wirkstoffe, Wirkstoffkonzentrationen, Auswertungszeiten und Resultate gehen aus der nachfolgenden Tabelle A hervor:

TABELLE A

(pflanzenschädigende Insekten)

Myzus-Test

| Wirkstoffe | Wirkstoffkonzentration in % | Abtötungsgrad in % nach 1 Tag |
|---|---|---|
| 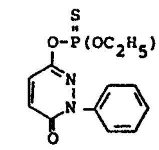 | 0,1 | 100 |
| | 0,01 | 95 |
| (bekannt) | 0,001 | 0 |
| 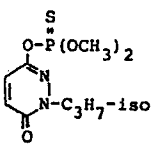 | 0,1 | 100 |
| | 0,01 | 100 |
| | 0,001 | 100 |
| 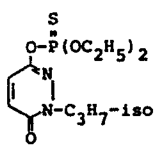 | 0,1 | 100 |
| | 0,01 | 100 |
| | 0,001 | 100 |
| 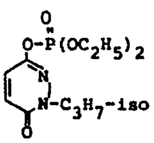 | 0,1 | 100 |
| | 0,01 | 100 |
| | 0,001 | 100 |
| 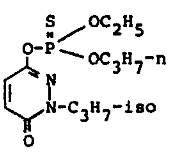 | 0,1 | 100 |
| | 0,01 | 100 |
| | 0,001 | 100 |
| 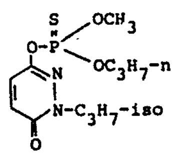 | 0,01 | 100 |
| | 0,01 | 100 |
| | 0,001 | 100 |

## Beispiel B

Tetranychus-Test (resistent)

Lösungsmittel: 3 Gewichtsteile Aceton

Emulgator: 1 Gewichtsteil Alkylarylpolyglykoläther

Zur Herstellung einer zweckmäßigen Wirkstoffzubereitung vermischt man 1 Gewichtsteil Wirkstoff mit der angegebenen Menge Lösungsmittel und der angegebenen Menge Emulgator und verdünnt das Konzentrat mit Wasser auf die gewünschte Konzentration.

Mit der Wirkstoffzubereitung werden Bohnenpflanzen (Phaseolus vulgaris), die stark von allen Entwicklungsstadien der gemeinen Spinnmilbe oder Bohnenspinnmilbe (Tetranychus urticae) befallen sind, tropfnaß besprüht.

Nach den angegebenen Zeiten wird die Abtötung in % bestimmt. Dabei bedeutet 100%, daß alle Spinnmilben abgetötet wurden; 0% bedeutet, daß keine Spinnmilben abgetötet wurden.

Wirkstoffe, Wirkstoffkonzentrationen, Auswertungszeiten und Resultate gehen aus der nachfolgenden Tabelle B hervor:

TABELLE B

(pflanzenschädigende Milben)

Tetranychus-Test

| Wirkstoffe | Wirkstoffkonzentration in % | Abtötungsgrad in % nach 2 Tagen |
|---|---|---|
| 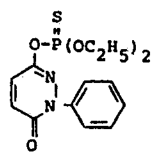 | 0,1 | 98 |
| | 0,01 | 20 |
| (bekannt) | | |
| 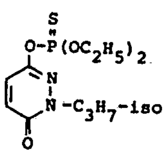 | 0,1 | 100 |
| | 0,01 | 98 |

## *Herstellungsbeispiele*

Beispiel 1

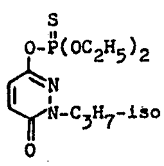

Ein Gemisch aus 15,4 g (0,1 Mol) 1 - Isopropyl - 1,6 - dihydro - 3 - hydroxy - 6 - oxo - pyridazin, 20,7 g (0,15 Mol) Kaliumcarbonat, 300 ml Acetonitril und 18,9 g (0,1 Mol) O,O - Diäthylthionophosphorsäurediesterchlorid wird 5 Stunden bei 45°C gerührt. Dann gibt man 400 ml Toluol zu und schüttelt das Reaktions-gemisch 2 mal mit je 300 ml Wasser. Die organische Phase wird über Natriumsulfat getrocknet, dann destilliert man das Lösungsmittel im Vakuum ab. Der Rückstand wird bei ca. 80°C andestilliert. Man erhält auf diese Weise 25,3 g (76% der Theorie) O,O - Diäthyl - O - [1 - iso - propyl - 1,6 - dihydro- 6 - oxo - pyridazin(3)yl] - thionophosphorsäureester in Form eines hellbraunen Öles mit dem Brechungsindex $n_D^{23}$: 1,5078.

Analog Beispiel 1 können die folgenden Verbindungen der Formel

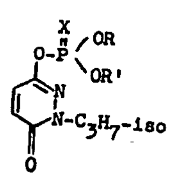

(I)

hergestellt werden:

| Beispiel Nr. | R | R' | X | Ausbeute (% der Theorie) | Brechungsindex: |
|---|---|---|---|---|---|
| 2 | $CH_3$ | $CH_3$ | S | 71 | $n_D^{23}$ : 1,5220 |
| 3 | $C_2H_5$ | $C_2H_5$ | O | 85 | $n_D^{21}$ : 1,4856 |
| 4 | $CH_3$ | $C_3H_7$-n | S | 78 | $n_D^{21}$ : 1,5099 |
| 5 | $C_2H_5$ | $C_3H_7$-n | S | 85 | $n_D^{21}$ : 1,5043 |
| 6 | $CH_3$ | $C_2H_5$ | S | | |

Das als Ausgangsmaterial zu verwendende 1-Isopropyl-1,6-dihydro-3-hydroxy-6-oxo-pyridazin kann zum Beispiel wie folgt hergestellt werden:

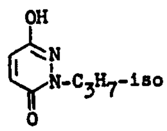

Zu einer Lösung von 73,8 g (0,6 Mol) Isopropylhydrazinsulfat in 180 ml Wasser und 10 ml konzentrierter Salzsäure gibt man bei 60°C 58,8 g (0,6 Mol) Maleinsäureanhydrid. Dan wird das Gemisch 3 Stunden unter Rückfluß gekocht und anschließend auf 0°C abgekühlt. Nach einer halben Stunden saugt man das ausgefallene Produkt ab. Man erhält so 59 g (64% der Theorie) 1-Isopropyl-1,6-dihydro-3-hydroxy-6-oxo-pyridazin in Form fabloser Kristalle mit dem Schmelzpunkt 148°C.

**Patentansprüche**

1. Verbindungen der Formel

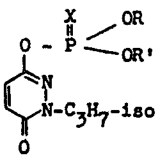

(I)

worin

R und R' für gleiches oder verschiedenes Alkyl und

X für Sauerstoff oder Schwefel stehen.

2. Verfahren zur Herstellung von Verbindungen gemäß Anspruch 1, dadurch gekennzeichnet, daß man (Thiono)Phosphorsäurediesterhalogenide der Formel

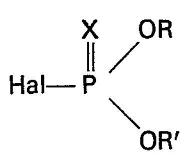

(II)

in welcher

R, R' und X die in Anspruch 1 angegebene Bedeutung haben und

Hal für Halogen, vorzugsweise Chlor, steht, mit 1,6-Dihydro-3-hydroxy-1-isopropyl-pyridazin(6) on der Formel

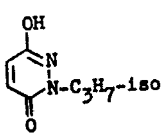

gegebenenfalls in Form der Alkali-, Erdalkali- oder Ammoniumsalze oder gegebenenfalls in Gegenwart eines Säureakzeptors und gegebenenfalls in Gegenwart eines Lösungsmittels umsetzt.

3. Insektizides und akarizides Mittel, gekennzeichnet durch einen Gehalt an mindestens einer Verbindung gemäß Anspruch 1.

4. Verfahren zur Bekämpfung von Insekten und Spinnentieren, dadurch gekennzeichnet, daß man Verbindungen gemäß Anspruch 1 auf Insekten und Spinnentiere oder ihren Lebensraum einwirken läßt.

5. Verwendung von Verbindungen gemäß Anspruch 1 zur Bekämpfung von Insekten und Spinnentieren.

6. Verfahren zur Herstellung von insektiziden und akariziden Mitteln, dadurch gekennzeichnet, daß man Verbindungen gemäß Anspruch 1 mit Streckmitteln und/oder oberflächenaktiven Mitteln vermischt.

**Revendications**

1. Composés de formule

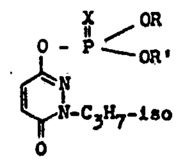

(I)

dans laquelle
R et R′ représentent chacun un alcoyle identique ou différent et
X représente de l'oxygène ou du soufre.

2. Procédé de préparation de composés selon la revendication 1, caractérisé en ce qu'on fait réagir des halogénures de diesters d'acide (thiono)phosphorique de formule:

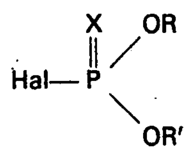

(II)

dans laquelle
R, R′ et X ont la signification indiquée à la revendication 1 et Hal repréesente de l'halogène, de préférence du chlore,
avec de la 1,6-dihydro-3-hydroxy-1-isopropyl-pyridazin(6)one de formule:

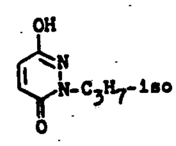

éventuellement sous forme de sels alcalins, alcalino-terreux ou ammoniacaux ou éventuellement en présence d'un accepteur d'acide et éventuellement en présence d'un solvant.

3. Agent insecticide et acaricide, caractérisé par une teneur en au moins un composé selon la revendication 1.

4. Procédé pour combattre les insectes et les arachnides, caractérisé en ce qu'on fait agir des composés selon la revendication 1 sur des insectes et des arachnides ou sur leur espace vital.

5. Utilisation des composés selon la revendication 1 pour combattre les insectes et les arachnides.

6. Procédé de préparation de composés insecticides et acaricides, caractérisé en ce qu'on mélange des composés selon la revendication 1 avec des diluants et/ou des agents tensioactifs.

**Claims**

1. Compounds of the formula

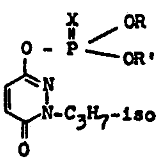

(I)

wherein
R and R′ represent identical or different alkyl and
X represents oxygen or sulphur.

2. A process for the preparation of compounds according to claim 1, characterized in that (thiono)phosphoric acid diester halides of the formula

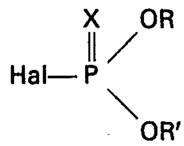

(II)

wherein

R, R′ and X have the meanings stated in claim 1 and Hal represents halogen, preferably chlorine, are reacted with 1,6-dihydro-3-hydroxy-1-isopropyl-pyridazin-6-one of the formula

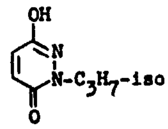

the latter being employed optionally in the form of the alkali metal salts, alkaline earth metal salts or ammonium salts, or optionally in the presence of an acid acceptor and optionally in the presence of a solvent.

3. An insecticidal and acaricidal composition, characterized in that it contains at least one compound according to claim 1.

4. A method of combating insects and arachnida, characterized in that compounds according to claim 1 are allowed to act on insects and arachnida or their environment.

5. The use of compounds according to claim 1 for combating insects and arachnida.

6. A process for the preparation of insecticidal and acaricidal agents, characterized in that compounds according to claim 1 are mixed with extenders and/or surface-active agents.